Europäisches Patentamt

European Patent Office

Office européen des brevets

(11) Publication number: **0 365 998**
**A2**

# EUROPEAN PATENT APPLICATION

(21) Application number: **89119362.5**

(51) Int. Cl.⁵: **C09J 7/02**

(22) Date of filing: **18.10.89**

(30) Priority: **26.10.88 US 263083**

(43) Date of publication of application:
**02.05.90 Bulletin 90/18**

(84) Designated Contracting States:
**AT BE CH DE ES FR GB GR IT LI LU NL SE**

(71) Applicant: **KIMBERLY-CLARK CORPORATION**
**401 North Lake Street**
**Neenah Wisconsin 54956(US)**

(72) Inventor: **Duis, James Joseph**
**121 Marson Drive**
**Dayton, Ohio 45405(US)**

(74) Representative: **DIEHL GLAESER HILTL &**
**PARTNER**
**Patentanwälte Flüggenstrasse 13**
**D-8000 München 19(DE)**

(54) **Water releasable pressure sensitive adhesive sheet material.**

(57) A water releasable pressure sensitive adhesive sheet material (10) is described having particular utility as stamps, labels, decals and the like. The sheet material comprises a combination of a substrate base sheet (12), a water soluble or dispersible layer (14) adhered thereto, a normally tacky pressure sensitive layer (16) covering the water dispersible layer (14), and a release sheet (18) covering the pressure sensitive layer (16). The sheet material (10) may be applied to a base such as an envelope and maintained in position by means of the pressure sensitive adhesive. When it is desired to separate the label or stamp, immersing in water or otherwise subjecting to highly aqueous conditions for a relatively short period of time results in the substrate base sheet floating free or otherwise easily removed by peeling without damage to the label or stamp.

FIG. 1

# WATER RELEASABLE PRESSURE SENSITIVE ADHESIVE SHEET MATERIAL

The present invention is directed to a multilayer sheet material having a normally tacky, pressure sensitive adhesive coating and useful for applications as stamps, labels, decals or the like.

Water soluble pressure sensitive hot melt adhesives which are suggested as useful for labels which may be readily water removed have been previously described, for example in U.S. Patent 4,331,576 dated 25 May 1982 to Colon and Maletsky. Such hot melt adhesives, of course, require hot melt processing and application procedures. These systems are generally not well suited for labels such as stamps, expected to have long shelf-lives, as these adhesives have a high tendency to migrate, especially into paper. A multilayer tape having a water soluble bond layer component has also been described in U.S. Patent 1,322,257 to Miller, dated 18 November 1919, for use as a veneering strip. However, this construction requires a porous face sheet. Many stamp and label applications require film or foil face materials for flexibility, printability and other reasons. The face materials required for these applications are frequently water resistant or impervious. These same applications, however, also require stamps or labels which can be applied using pressure sensitive adhesives which provide in a short time high adhesion or tamper-evident bonds, yet can be removed without damage to the stamp or label at a later time. Other delaminatable adhesive sheet or tape constructions are described in U.S. Patent 3,076,588 to Conway, et al. dated 5 February 1963, and U.S. Patent 4,398,985 to Eagon dated 16 August 1983, as well as U.S. Patent 4,698,248 to Gallagher, Sternasty, and James dated 6 October 1987.

In spite of the foregoing descriptions, there remains desired an economical pressure sensitive adhesive sheet material for such applications as stamps, labels, decals and the like that may be easily applied, provide high adhesion or tamper-evident bonds, yet be removed or separated when desired. For example, consumers have frequently expressed a preference for stamps with pressure sensitive adhesives that avoid the necessity for applying moisture, particularly when this frequently requires the user to do so by licking the stamp. The U.S. Postal Service requires stamps to remain permanently affixed to envelopes through manual and automatic handling. On the other hand, collectors of stamps will want to be able to readily remove them and do so without damage, using their common practice of soaking them in water to free them from the envelope.

The present invention provides a unique and cost-effective adhesive coated sheet material particularly useful for applications such as postage stamps, labels or decals. The sheet material of the invention is evident from the independent claim . Further advantageous features of this sheet material are evident from the dependent claims. The sheet material of the invention is in the form of a normally tacky pressure sensitive product that may be applied to a surface and readily removed by the application of aqueous conditions. In accordance with the present invention, it has been found that these results may be achieved through the use of a combination of a base sheet, a water soluble or dispersible layer on one side of the base sheet, a normally tacky pressure sensitive adhesive layer covering the water soluble or dispersible layer, and a release sheet. Upon application of the normally tacky pressure sensitive adhesive side to a substrate, it becomes firmly bonded, and yet by soaking or exposure to steam or other highly aqueous conditions, the sheet material separates from the base either by itself or with slight pulling force. Examples of preferred substrates include stamp paper such as coated and uncoated printing papers having a basis weight generally in the range of from 74 to 104 gms/sq. meter. Examples of water soluble or dispersible layers include coatings of such water remoistenable adhesives based on dextrin, or blends of dextrin with polyvinyl acetate, poly (ethyloxazoline), polyvinyl alcohol-based coatings, blends of polyvinyl alcohol with polyvinyl acetate-based coatings, modified starches, animal bone and hide derived glues, and combinations of these materials. Examples of normally tacky pressure sensitive adhesives include those natural or synthetic "rubber-based", "acrylic-based", or other such compositions known in the art.

The combination of the present invention may be readily manufactured at low cost and is particularly effective in use as a water-releasable, pressure sensitive postage stamp material.

The sheet material is advantageous in that, while it has pressure sensitive adhesive properties, the construction provides substantially complete release of the face material from a base or substrate to which it has been attached after being subject to aqueous conditions for a relatively short period of time. As a postage stamp, for example, the stamp may be readily removed from an envelope without tearing by immersing the stamped portion of the envelope in water. Also, as a label applied to a container, the label may be removed simply by soaking. Thus, for many promotional programs where label return is an aspect, the present invention provides a unique and highly convenient product.

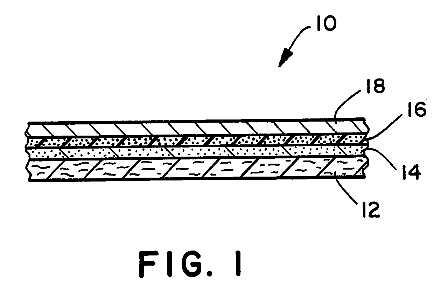

FIGURE 1 is a cross-section of one embodiment of the water releasable pressure sensitive adhesive sheet material of the present invention.

While the invention will be described in connection with preferred embodiments, it will be understood that it is not intended to limit the invention to those embodiments. On the contrary, it is intended to cover all alternatives, modifications, and equivalents as may be included within the spirit and scope of the invention as defined by the appended claims.

In accordance with the present invention, the substrate may be selected from a wide variety of available, printable webs. For example, it may be selected from paper, cloth, film or foils. The intended end use will dictate the properties of the substrate material such as, for example, basis weight, strength, and the like. Examples of paper substrates include 89 grams per square meter (gsm) Matte Litho coated paper such as is available from the Plainwell Paper Co., and 74 gsm English Finish as is available from P. H. Glatfelter Co. Examples of fabric substrates include nonwovens such as TYVEK 1058D available from E.I. du Pont de Nemours & Co., and textiles such as White Holland available from Holliston Mills, Inc. Examples of films include Kimdura FPG-80 available from Kimberly-Clark Corporation. Examples of foils include Bright Gold Laminated Foil available from Hazen Paper Co. A preferred substrate for application, for example as a stamp, is stamp paper facestock having a basis weight of about 90 gsm, and available as 54 lb. Bright White Stamp Paper from Paper Corporation of the United States. Other substrate web materials will suggest themselves to those skilled in the art.

Any of a wide variety of water soluble or dispersible coatings may be employed in the present invention. These include, without limitation, water moistenable adhesives such as are described in U.S. Patent 3,425,968 to Rieling dated 4 February 1969, for example, as well as specific examples such as 33-2085 available from National Starch and Chemical Corp., and Duracet RM available from Franklin International. Selection of a particular coating for the purposes of the present invention will depend upon the desired end use as well as the nature of the substrate web. The determining factors will include the compatibility of the substrate sheet and the coating; for example, the coating must not unduly deteriorate the substrate web sheet, nor can the coating interfere unduly with the subsequently applied pressure sensitive adhesive composition. A second factor will be the degree of water solubility or dispersibility which will directly affect the release time. For purposes of the present invention, the preferred water soluble or dispersible coatings will allow separation of the substrate from the envelope or the like to which it is adhered without damage to the substrate when immersed in water from 1 minute to 96 hours, and most preferably in the range of 20 minutes to 24 hours. Other types of water dispersible or water soluble coatings which may be employed include dextrin-based materials such as that available as 6-GPS adhesive from Kimberly-Clark, Brown-Bridge, polyvinyl acetate-dextrin blend adhesive such as National Starch 33-2058 available from National Starch and Chemical Corp., poly (ethyloxazoline) available from Dow Chemical Company as "PEOX", polyvinyl alcohol based adhesives available as TL barrier coat from Kimberly-Clark, Brown-Bridge, polyvinyl acetate-polyvinyl alcohol blend adhesives available such as Duracet RM from Franklin International, animal-derived, glue-based adhesive such as 51-DAF from Kimberly-Clark, Brown-Bridge.

The normally tacky pressure sensitive adhesive coating may be selected from a wide variety of materials that are compatible with the other sheet material components and which provide the desired degree of tack and adhesion. By "normally tacky pressure sensitive" is meant that the coating has the following property: when the adhesive is brought into contact with the object to which it is to adhere, nothing more than a minimum of force and time of contact is required for adhesion to occur. Examples include acrylates and natural or synthetic rubber-based compositions.

The release sheet may be selected from a wide variety of sheets available. The important attribute is that the sheet adheres to the pressure sensitive adhesive coating, but be removable if pulled away by hand without damage to the remainder of the construction. These include paper and film bases coated with silicone or other release coatings.

The amount of each coating applied will depend upon the particular application as well as other components of the sheet material. For example, using a postage stamp paper based sheet material, the water soluble or dispersible coating of dextrin-based coating will be generally in the range of from about 15 gsm to 45 gsm, and a normally tacky, pressure sensitive adhesive coating of "acrylate" or "rubber-based" composition will be in the range generally of from about 12 gsm to 37 gsm to provide a pressure sensitive adhesive stamp product.

Turning to FIGURE 1, the sheet material of the present invention may comprise a four-layer composite 10, including base sheet 12, water soluble or dispersible coating 14, and normally tacky pressure sensitive adhesive coating 16, and release sheet 18.

Methods for producing the sheet material of the present invention will be apparent to those skilled in the art and can be accomplished by a wide variety of coating or laminating steps. For example, the base sheet may be coated with the water soluble or dispersible coating, after which a pressure sensitive adhesive may be coated directly on top of the water soluble or dispersible coating. A release sheet may then be applied on top of the pressure sensitive adhesive. Alternatively, a base sheet may be coated with the water soluble or dispersible coating, and separately a release liner material coated with the normally tacky pressure sensitive adhesive coating. The two coated materials may then be laminated by pressure through a nip or the like to combine them into a single sheet material. Other coating or laminating methods will suggest themselves to those of ordinary skill in this art.

To determine compositions suitable for use in accordance with the present invention, it is usually necessary to form the sheet material in its entirety in order to evaluate the bond between the water-soluble or dispersible coating and the normally tacky pressure sensitive adhesive, or the ease of removability of the base sheet in water from the object to which the normally tacky pressure sensitive adhesive is adhered. In a preferred embodiment, the normally tacky pressure sensitive adhesive will form a permanent bond to the object to which it is adhered, i.e., either the base material or the object to which the normally tacky pressure sensitive adhesive is bonded will be distorted or damaged when removal of the sheet material is attempted. However, normally tacky pressure sensitive adhesives can be selected to provide a removable bond, or a temporarily removable bond, depending on the intended application. The method used to evaluate the water removability of the sheet material from envelopes, for example, and the method used to evaluate the dry adhesion performance of the sheet material is described in Example 1.

## EXAMPLES

Example 1:

Fifty-four pound (90 gsm) basis weight stamp paper available from Paper Corporation of the United States as 54 pound Bright White Stamp Paper was coated with a dextrinbased water-dispersible coating available from Kimberly-Clark Corporation, Brown-Bridge, as 6-GPS, to a dried weight of 33 gsm. Coating was accomplished by the kiss roll method. A 100% solids "rubber-based" pressure sensitive adhesive, National Starch 34-4134, was coated onto the release side of 59 gsm basis weight release paper by slot die coating method. The pressure sensitive adhesive coated release paper was then laminated to the water-dispersible adhesive coated paper, so that the two adhesives were then bonded together.

To determine adhesive properties, one-inch-square samples of the dried material were cut, and the liner removed. The material was applied by hand to envelope paper identified as 24-pound White Wove available from Westvaco. After ten minutes and twenty-four hours, the samples were pulled by hand to attempt removal. The interval at which the sample or envelope initially tore was recorded. One-square-inch samples were also applied to the same envelope paper and subsequently immersed in 500 milliliters of water. Samples were checked after one hour, and subsequently after twenty-four hour periods to determine whether the sample had floated free. If the sample was observed to have floated free before or between the twenty-four hour inspection period, the time was noted. If the sample had not floated free after 24 hours, the envelope was agitated slightly to determine if the sample would detach and float away. If the sample had not floated free, it was pulled by hand to determine if it would remove without damage to the sample. If the sample was damaged when pulled after 24 hours, additional samples were soaked in water and tested for removal for longer time periods, up to 96 hours.

Samples according to this example tore after ten minutes when dry, but floated free with slight agitation of the envelope after only one hour when immersed in water.

Example 2:

Fifty-four pound (90 gsm) basis weight stamp paper identified as 54-pound Bright White Stamp Paper available from Paper Corporation of the United States was coated with a dextrin-based water dispersible coating available from Kimberly-Clark Corporation, Brown-Bridge, as 6-GPS, to a dried weight of 33 gsm. Coating was accomplished by the kiss roll method. A water-borne "acrylate-based" pressure sensitive adhesive available for Franklin International as Covinax 336-05 was coated by wire wound rod over the water dispersible coating to a dried weight of 21 gsm and dried. A silicone-coated release liner was then applied over the pressure sensitive adhesive.

Samples were tested for adhesive properties and described in Example 1. Samples according to this example tore after 10 minutes when dry, but floated free after only one hour when immersed in water.

Example 3:

Fifty pound (74 gsm) basis weight English Finish (E.F.) paper available from P. H. Glatfelter Co. was coated using a wire wound rod with a resin-dextrin water dispersible coating, National Starch and Chemical Corp. 33-2058, to a dried weight of 19 gsm and dried. A water-borne acrylate-based pressure sensitive adhesive, Covinax 331-05 available from Franklin International was coated onto the release side of 65 gsm release paper to a dried weight of 21 gsm and dried. The pressure sensitive adhesive coated release paper was then laminated to the water-dispersible coating so that the two adhesives were then bonded together.

Samples were tested for adhesive properties as described in Example 1. Samples according to this example tore after 10 minutes when dry, but floated free after 96 hours when immersed in water.

Example 4:

Fifty pound * basis weight E.F. paper as described in Example 3 was coated with a 40% in water solution of poly (ethyloxazoline), available from Dow Chemical Co. using a wire wound rod to a dried weight of 17 gsm and dried. A water-borne "rubber-based" pressure sensitive adhesive available from H.B. Fuller Co. as XR-1813 was coated to a dried weight of 23 gsm onto 81 gsm basis weight release paper as described in Example 3 and then laminated with the water-dispersible adhesive as described in Example 3.

Samples were tested for adhesive properties as described in Example 1. Samples according to this example tore after 10 minutes when dry, but floated free after 24 hours with slight agitation of the envelope.

Example 5:

Fifty pound * basis weight E.F. paper as described in Example 3 was coated with a water-borne polyvinyl acetate/polyvinyl alcohol blend water-dispersible adhesive coating obtained from Franklin International as Duracet RM, using a wire wound rod to a dried weight of 23 gsm and dried. The water-borne "acrylate-based" pressure sen-

*(74 gsm)

* (74 gsm)

sitive adhesive, Covinax 331-05, described in Example 3 was coated onto 81 gsm basis weight release paper as described in Example 3 and then laminated to the dried Duracet RM coating as described in Example 3.

Samples were tested for adhesive properties as described in Example 1, except that the envelope used was obtained from Kimberly-Clark Corporation, Karolton Envelope and was made from TYVEK, available from E.I. du Pont de Nemours & Co. Samples tested in this example tore after 24 hours, and floated free after 24 hours' immersion in water with slight agitation of the envelope.

Example 6:

Fifty pound * basis weight E.F. paper as described in Example 3 was coated with a water-dispersible coating, a solvent/water-borne polyvinyl alcohol solution, available from Kimberly-Clark Corporation, Brown-Bridge, as TL barrier coat, to a dried weight of 15 gsm and dried. The water-borne "rubber-based" pressure sensitive adhesive, H.B. Fuller Co. XR-1813, described in Example 4 was coated to a dried weight of 18 gsm as described in Example 4, and laminated as described in Example 3.

Samples were tested for adhesive properties as described in Example 5. Samples tested in this example tore after 24 hours when dry, but floated free after 24 hours' immersion in water with slight agitation of the envelope.

Example 7:

Fifty pound * basis weight E.F. paper as described in Example 3 was coated with a water dispersible coating of the type described in Reiling U.S. Patent No. 3,425,968 and available from Kimberly-Clark Corporation, Brown-Bridge as Pancake®, by wire wound rod to a dried weight of 18 gsm. The 100% solids hot-melt, rubber-based adhesive described in Example 1, National Starch and Chemical Corp. 34-4134, was coated onto 65 gsm release paper to a weight of 21 gsm and laminated as described un Example 1.

Samples according to this example were tested for adhesive properties as described in Example 5. Samples in this example tore after 24 hours when dry, but failed to float free after 96 hours of immersion in water. However, the sample could be removed without tearing by pulling after 96 hours' immersion.

Example 8:

Eighty-μm thick polypropylene film laminate, available from Kimberly-Clark Corporation as Kimdura FPG-80 was coated with a water-dispersible coating obtained from Franklin International as Duracet RM, using a wire wound rod to a dried weight of 20 gsm and dried. The water-borne "acrylate-based" pressure sensitive adhesive, Covinax 336-05, described in Example 2 was coated onto 81 gsm basis weight release paper as described in Example 3, and laminated with the Duracet RM coating as described in Example 3.

Samples were tested for adhesive properties as described in Example 1. Samples according to this example tore after 24 hours when dry, but removed with slight pulling after 24 hours' immersion in water.

Example 9:

Seventy-one pound (105 gsm) basis weight foil-paper laminate base sheet available from Hazen Paper Co. was coated on the paper side using a wire wound rod with a water-dispersible coating Duracet RM, described in Example 5 to a dried weight of 22 gsm and dried. The water-borne "acrylate-based" pressure sensitive adhesive, Covinax 336-05, described in Example 2 was coated onto 81 gsm basis weight release paper as described in Example 3, and laminated with the Duracet RM coating as described in example 3.

Samples were tested for adhesive properties as described in Example 1. Samples according to this example tore after 24 hours when dry, but removed with slight pulling after 24 hours' immersion in water.

Example 10:

TYVEK 1058 nonwoven polyolefin fabric, available from E.I. du Pont de Nemours & Co., was coated with a dextrin-based, water-remoistenable adhesive coating available from Kimberly-Clark Corporation, Brown-Bridge as 100-C-68, to a dried weight of 33 gsm by kiss roll method and dried. The water-borne, "acrylate-based" pressure sensitive adhesive, Covinax 336-05, described in Example 2 was coated onto 81 gsm basis weight release paper as described in Example 3, and laminated with the 100-C-68 coating as described in Example 3.

Samples were tested for adhesive properties as described in Example 1. Samples according to this example tore the envelope after 24 hours when dry, but removed with slight pulling after 24 hours' immersion in water.

Example 11:

One hundred pound (153 gsm) coated cotton fabric, available from Holliston Mills Inc. as White Holland, was coated with animal-derived, glue-based, water-remoistenable adhesive coating available from Kimberly-Clark Corporation, Brown-Bridge as 51-DAF, to a dried weight of 30 gsm by kiss roll method and dried. The water-borne, "acrylate-based" pressure sensitive adhesive, Covinax 336-05, described in Example 2 was coated onto 81 gsm basis weight release paper as described in Example 3, and laminated with the 51-DAF coating as described in Example 3.

Samples were tested for adhesive properties as described in Example 1. Samples according to this example tore the envelope after 24 hours when dry, but removed with slight pulling after 24 hours' immersion in water.

As can be seen, the time required for the pressure sensitive adhesive to form a permanent dry bond, and removability time in water varied with the pressure sensitive adhesive-water dispersible coating combinations evaluated. Selection of the pressure sensitive adhesive can provide a removable, temporary, repositionable, bond to the envelope or substrate which becomes permanent upon aging for about 10 minutes or longer. In combination with the pressure sensitive adhesive, selection of the water soluble or dispersible coating allows the substrate base sheet to be removed without damage from a substrate to which it is adhered by subjecting the sheet to aqueous conditions for a short period of time.

In the form of stamps, labels or the like, the sheet material of the present invention demonstrates the ability to provide a permanent pressure sensitive adhesive attachment and yet can be readily removed when desired by subjecting it to an aqueous environment. Such an environment will be at least 100% relative humidity so that attempts to separate when dry or at less than 100% relative humidity will result in tearing of the backing or the substrate, or at least a high degree of difficulty of removal if the label and substrate have high resistance to tearing or delamination.

Thus, it is apparent that there has been provided, in accordance with the invention, a water-releasable, permanent pressure sensitive adhesive sheet material that fully satisfies the objects, aims, and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within in the spirit and broad scope of the appended claims.

## Claims

1. Water releasable pressure sensitive sheet material (10) comprising:
   (a) a substrate base sheet (12)
   (b) a water soluble or dispersible layer (14) adhered on one side of said substrate base sheet (12), and
   (c) a normally tacky, pressure sensitive adhesive layer (16) covering said water soluble or dispersible layer (14).

2. The sheet material of claim 1 further including a release sheet (18) covering said pressure sensitive adhesive (16).

3. The sheet material of claim 1 or 2 wherein said substrate (12) is selected from the group consisting of paper, fabrics, nonwovens, and films.

4. The sheet material of one of the preceding claims wherein said water soluble or dispersible layer (14) is a coating selected from the group consisting of dextrin-based compositions, polyvinyl acetate dextrin-blends, poly (ethyloxazoline), polyvinyl alcohol, polyvinyl acetate-polyvinyl alcohol blends, starch, and animal-derived bone and hide glues.

5. The sheet material of one of the preceding claims, characterized by the ability of the substrate base sheet (12) to be removed without damage from a substrate to which it is adhered, by subjecting the adhered sheet material to aqueous conditions for a time in the range of up to about 24 hours.

6. The sheet material of one of the preceding claims wherein the pressure sensitive adhesive is based on an acrylate or a natural or synthetic rubber.

FIG. 1